# EUROPÄISCHE PATENTSCHRIFT

(11) **EP 1 488 966 B1**
(45) Veröffentlichungstag und Bekanntmachung des Hinweises auf die Patenterteilung: **26.04.2006**
(21) Anmeldenummer: 04013355.5
(22) Anmeldetag: 07.06.2004
(51) Int. Cl.: B60R 21/20, B60R 21/26

(54) **Gasgeneratorbaugruppe**
Gas generating module
Module générateur de gaz

(30) Priorität: 17.06.2003 DE 20309360 U
(43) Veröffentlichungstag der Anmeldung: 22.12.2004
(73) Patentinhaber: TRW Automotive Safety Systems GmbH, 63743 Aschaffenburg (DE)
(72) Erfinder: Kähler, Karsten, 63743 Aschaffenburg (DE); Schönhuber, Georg, 84565 Oberneukirchen (DE)
(74) Vertreter: Kitzhofer, Thomas

(56) Entgegenhaltungen:
- DE-A- 2 360 315
- US-A- 6 155 599
- US-B1- 6 341 799

## Beschreibung

Die Erfindung betrifft eine Gasgeneratorbaugruppe, mit einem ein Außengehäuse aufweisenden Gasgenerator und einem als separate Einheit außerhalb des Gasgenerators vorgesehenen Diffusor, der eine Wand und ein an der Wand angebrachtes Filter aufweist. Eine derartige Baugruppe ist allgemein bekannt. Zum Stand des Technik wird beispielsweise auf die US-A-6 155 599 hingewiesen.

Diese bekannten Gasgeneratorbaugruppen sind Teil eines Gassackmoduls. Zwischen dem Gasgenerator und dem ihn umgebenden Diffusor ergibt sich ein Diffusorraum, in den das Gas einströmt, bevor es den Gassack aufbläst. Um Filtermaterial im Gasgenerator zu reduzieren, ist es bekannt, im Diffusor ein oder mehrere Filter vorzusehen. Diese Filter sind vor den Ausströmöffnungen in der Wand des Diffusors angebracht. Das Gas durchströmt das Filter und gelangt rückseitig unmittelbar zu den Durchströmöffnungen.

Ein weiterer Grund, warum außerhalb des Gasgenerators im Diffusor Filter untergebracht sind, ist die Temperatur der Partikel, die auszufiltern sind. Diese Partikel sind im Gasgenerator oft noch flüssig und können dort nicht ausreichend gefiltert werden. Erst beim Austritt des Gases aus dem Gasgenerator gehen die Partikel in die feste Phase über.

Die Erfindung schafft eine Gasgeneratorbaugruppe, die sich durch eine gute Filterwirkung auszeichnet.

Dies wird bei einer Gasgeneratorbaugruppe der eingangs genannten Art dadurch erreicht, daß die Wand im Bereich des Filters keine Durchströmöffnung besitzt. Die Wand ist also hinter dem Filter gasdicht, also auf der Seite des Filters, an der er an die Wand angrenzt. Während bei den bekannten Gasgeneratorbaugruppen, wie zuvor erwähnt, unmittelbar rückseitig des Filters Durchströmöffnungen in der Wand des Diffusors vorgesehen sind, läßt die Wand gemäß der Erfindung im Bereich des Filters, d.h. hinter dem Filter, keinen Gasaustritt zu. Das Gas gelangt in das Filter, wird durch die Wand umgelenkt und durchströmt das Filter seitlich. Das bedeutet, das Filter wird fast auf seinem gesamten Volumen gleichmäßig durchströmt und hat eine gute Filter- und Kühlwirkung.

Das Außengehäuse ist eine in sich geschlossene Einheit, die allein dem Gasdruck, der beim Aktivieren des Gasgenerators entsteht, standhält. Ferner ist der Diffusor nicht unmittelbar mit dem Außengehäuse verbunden.

Bei der bevorzugten Ausführungsform ist vorgesehen, daß das Außengehäuse des Gasgenerators Ausströmöffnungen besitzt und das Filter zu den Ausströmöffnungen gegenüberliegend angeordnet ist, um von erzeugtem Gas aus dem Gasgenerator direkt angeströmt zu werden. Es ist zwischen den Ausströmöffnungen und dem Filter keine weitere Zwischenwand oder ein Diffusorblech vorgesehen. Da das Gas unmittelbar in das Filter strömt, erfährt es sehr schnell eine Abkühlung.

Das Filter umgibt den Gasgenerator im Bereich von dessen Ausströmöffnungen umfangsmäßig vollständig, wie vorzugsweise vorgesehen.

Der Diffusor kann topfförmig ausgebildet sein, wobei das Filter hierbei innenseitig an der Umfangswand des Diffusors angebracht sein sollte.

Die Durchströmöffnungen im topfförmigen Diffusor sind vorzugsweise in der Umfangswand und/oder in der Stirnwand.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine Querschnittsansicht durch ein Lenkradgassackmodul mit einer erfindungsgemäßen Gasgeneratorbaugruppe und
- Figur 2 eine vergrößerte Ansicht des Gassackmoduls mit der erfindungsgemäßen Gasgeneratorbaugruppe nach Figur 1.

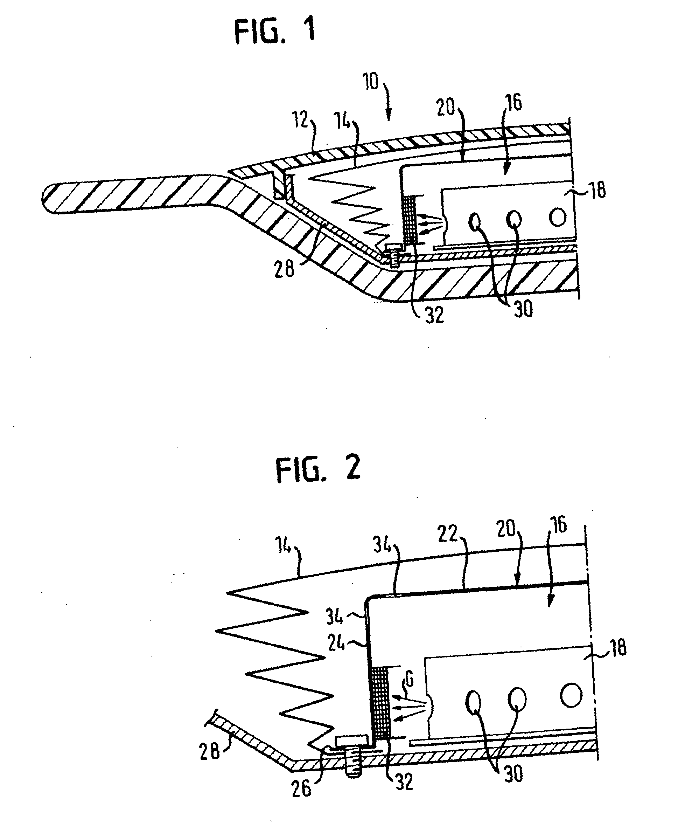

In Figur 1 ist ein Fahrzeuglenkrad im Halbschnitt dargestellt, das ein Gassackmodul 10 aufweist. Unter der Abdeckkappe 12 ist ein gefalteter Gassack 14 angeordnet. Im Gassack 14 wiederum ist eine Gasgeneratorbaugruppe 16 angeordnet. Die Gasgeneratorbaugruppe 16 besteht aus einem ein Außengehäuse 18 aufweisenden zylindrischen Gasgenerator und einem topfförmigen Diffusor 20 aus Blech. Der Diffusor 20 ist ein vom Gasgenerator getrenntes und ihn umgebendes Bauteil, das in radialer und axialer Richtung Abstand vom Außengehäuse 18 hat.

Der Diffusor 20 hat eine Stirnwand 22, eine sich daran anschließende Umfangswand 24 und einen sich am unteren Ende der Umfangswand 24 anschließenden radialen Ringflansch 26. Der den Einblasmund des Gassacks 14 definierende Rand des Gassacks 14 ist zwischen der Unterseite des Ringflansches 26 und einer Modulwanne 28 geklemmt. Der Gasgenerator ist ebenfalls an der Modulwanne 28 befestigt.

An der Innenseite der Umfangswand 24 des Diffusors 20 ist ein Filter befestigt, und zwar unmittelbar den Ausströmöffnungen 30 im Außengehäuse 18 gegenüberliegend. Das Filter 32 umgibt den Gasgenerator im Bereich der Ausströmöffnungen 30 vollständig und hat eine Höhe, in Axialrichtung gemessen, die größer als der Durchmesser der Ausströmöffnungen 30 ist.

Die Umfangswand 24 besitzt hinter dem Filter 32, d.h. im Anlagebereich des Filters 32, keine Durchströmöffnung. Durchströmöffnungen 34 sind lediglich oberhalb des Filters 32 in der Umfangswand 24 und/oder in der Stirnwand 22 vorgesehen.

Gas G verläßt beim Aktivieren des Gasgenerators dessen Außengehäuse 18 und trifft zuerst auf das Filter 32, das es radial durchströmt, um schließlich von der Wand 24 umgelenkt zu werden und das Filter in Axialrichtung zu durchströmen. Das Gas G wird gekühlt, und die im Gas enthaltenen Partikel bleiben im Filter 32. Das Gas verläßt schließlich den Diffusor 20 über die Durchströmöffnungen 34, um den Gassack 14 zu entfalten.

Das Filter kann aus Metall, Keramik oder Kunststoff bestehen, es kann grob und/oder fein strukturierte Abschnitte haben, mit Freiräumen und Zwischenräumen. Ausführungsformen des Filters 32 sind Maschengestricke, Streckgitter, Lochbleche, Feinvliese, Lamellenbleche etc..

## Patentansprüche

1. Gasgeneratorbaugruppe, mit
einem ein Außengehäuse (18) aufweisenden Gasgenerator und
einem als separate Einheit außerhalb des Gasgenerators vorgesehenen Diffusor (20), der eine Wand und ein an der Wand angebrachtes Filter (32) aufweist,
**dadurch gekennzeichnet, daß**
die Wand im Bereich des Filters (32) keine Durchströmöffnung besitzt.

2. Gasgeneratorbaugruppe nach Anspruch 1, **dadurch gekennzeichnet, daß** das Außengehäuse (18) Ausströmöffnungen (30) besitzt und das Filter (32) zu den Ausströmöffnungen (30) gegenüberliegend angeordnet ist, um von erzeugtem Gas aus dem Gasgenerator direkt angeströmt zu werden.

3. Gasgeneratorbaugruppe nach Anspruch 1 oder 2, **dadurch gekennzeichnet, daß** das Filter (32) den Gasgenerator umfangsmäßig im Bereich von dessen Ausströmöffnungen (30) vollständig umgibt.

4. Gasgeneratorbaugruppe nach einem der vorhergehenden Ansprüche, **dadurch gekennzeichnet, daß** der Diffusor (20) topfförmig ausgebildet ist.

5. Gasgeneratorbaugruppe nach Anspruch 4, **dadurch gekennzeichnet, daß** das Filter (32) innenseitig an der Umfangswand (24) des Diffusors (20) angebracht ist.

6. Gasgeneratorbaugruppe nach einem der vorhergehenden Ansprüche, **dadurch gekennzeichnet, daß** Durchströmöffnungen (34) in der Umfangswand (24) des topfförmigen Diffusors (20) vorgesehen sind.

7. Gasgeneratorbaugruppe nach einem der vorhergehenden Ansprüche, **dadurch gekennzeichnet, daß** Durchströmöffnungen (34) in der Stirnwand (22) des topfförmigen Diffusors (20) vorgesehen sind.

## Claims

1. A gas generator assembly, comprising
a gas generator having an outer housing (18), and
a diffusor (20) which is provided as a separate unit outside the gas generator and which has a wall and a filter (32) mounted on the wall,
**characterized in that**
the wall does not have a through-flow opening in the region of the filter (32).

2. The gas generator assembly according to Claim 1, **characterized in that** the outer housing (18) has outflow openings (30) and the filter (32) is arranged opposite from the outflow openings (30) in order to have generated gas from the gas generator flowing directly against it.

3. The gas generator assembly according to Claim 1 or 2, **characterized in that** the filter (32) completely surrounds the gas generator peripherally in the region of the outflow openings (30) thereof.

4. The gas generator assembly according to any of the preceding claims, **characterized in that** the diffusor (20) is constructed in a cup shape.

5. The gas generator assembly according to Claim 4, **characterized in that** the filter (32) is mounted on the inner side of the peripheral wall (24) of the diffusor (20).

6. The gas generator assembly according to any of the preceding claims, **characterized in that** through-flow openings (34) are provided in the peripheral wall (24) of the cup-shaped diffusor (20).

7. The gas generator assembly according to any of the preceding claims, **characterized in that** through-flow openings (34) are provided in the end wall (22) of the cup-shaped diffusor (20).

## Revendications

1. Ensemble de générateur de gaz, comportant
un générateur de gaz présentant un boîtier extérieur (18) et
un diffuseur (20) prévu à l'extérieur du générateur de gaz sous forme d'unité séparée, lequel présente une paroi et un filtre (32) monté sur la paroi,
**caractérisé en ce que**
la paroi ne possède pas d'orifice de passage d'écoulement dans la région du filtre (32).

2. Ensemble de générateur de gaz selon la revendication 1, **caractérisé en ce que** le boîtier extérieur possède des orifices de sortie d'écoulement (30) et le filtre (32) est agencé à l'opposé des orifices de sortie d'écoulement (3) pour que l'écoulement engendré par le gaz sortant du générateur afflue directement contre lui.

3. Ensemble de générateur de gaz selon la revendication 2 ou 3, **caractérisé en ce que** le filtre (32) entoure complètement le générateur de gaz sur sa périphérie dans la région de ses orifices de sortie d'écoulement (30).

4. Ensemble de générateur de gaz selon l'une des revendications précédentes, **caractérisé en ce que** le diffuseur (20) est réalisé en forme de pot.

5. Ensemble de générateur de gaz selon la revendication 4, **caractérisé en ce que** le filtre (32) est monté sur la face intérieure de la paroi périphérique (24) du diffuseur (20).

6. Ensemble de générateur de gaz selon l'une des revendications précédentes, **caractérisé en ce que** des orifices de passage d'écoulement (34) sont prévus dans la paroi périphérique (24) du diffuseur (20) en forme de pot.

7. Ensemble de générateur de gaz selon l'une des revendications précédentes, **caractérisé en ce que** des orifices de passage d'écoulement (34) sont prévus dans la paroi frontale (22) du diffuseur (20) en forme de pot.
